Europäisches Patentamt

European Patent Office

Office européen des brevets

(11) Publication number: **0 504 598 A1**

# EUROPEAN PATENT APPLICATION

(21) Application number: **92102639.9**

(22) Date of filing: **18.02.92**

(51) Int. Cl.5: **B01D 63/10**, C12G 1/00, A23L 2/30

PRIORITY 140391 ITA VR91000022.

(30) Priority: **14.03.91**

(43) Date of publication of application:
**23.09.92 Bulletin 92/39**

(84) Designated Contracting States:
**AT BE CH DE DK ES FR GB GR IT LI LU MC NL PT SE**

(71) Applicant: **PERDOMINI SpA**

Via Salvo d'Acquisto, 2
**I-37036 San Martino Buon Albergo (VR)(IT)**

(72) Inventor: **De Mattia, Maurizio**
**Via Interrato Acqua Morta 30**
**I-37129 Verona(IT)**

(74) Representative: **Petraz, Gilberto Luigi**
**GLP S.r.l. Piazzale Cavedalis 6/2**
**I-33100 Udine(IT)**

(54) **Filtration module for filtration plants of wines or fruit juices, and filtration plant provided with such module.**

(57) The filtration module according to the invention comprises a cartridge constituted by a helically wound polytetrafluorethylene membrane (12,14), of the type which is generally used for carrying out microfiltration processes.

Surprisingly, it has been remarked that such membrane, which may normally not be used for carrying out filtration processes of foodstuffs, and particularly of wine, may yet find an application in these processes by means of a simple constructive step consisting in:

- the membrane having a rated void fraction (discriminating layer) of at least 0,1 $\mu$ and, advantageously, of 0,2 $\mu$, and
- the spacing mesh (15) disposed between the various windings having a thickness of at least 1 mm.

## FIELD OF APPLICATION

The present invention relates to a filtration module for filtration plants of wines or fruit juices.

More particularly, the present invention relates to a module suitable for being used in filtration plants of wines or fruit juices, and comprising a helically wound membrane forming a substantially cylindrical filtration module.

The invention has a particularly advantageous form of embodiment in the field of oenological industry.

## BACKGROUND ART

Tangential filtration processes of foodstuffs and/or chemical and/or chemical/pharmaceutical products are known in the art.

Such processes provide for the use of submicronic filtration systems based on the use of semi-permeable membranes which are constituted by selective permeators forming the separation means between two chemical species.

Said selective permeators are generally constituted by polymeric thin films having a very high surface/thickness ratio, the separation between the chemical species taking place thanks to the selective transfer properties, i.e. the different transfer speeds of these films; the thrust force for activating and mantaining the process may be represented by a mechanically imparted pressure, or by a gradient of concentration or of electrical potential or of temperature.

A filtration module used in this kind of processes is constituted by a plurality of capillary and/or tubular fibrous and self-supporting polysulfonate cartridges which are housed within a tubular container made of plastic or of a metallic material and is described in italian utility model application n. 63252/90.

The highly porous structure of the membrane is asymmetric.

In accordance with the direction of flow of the liquid (inside > outside), the discriminating layer, which has a thickness of about 0,1 $\mu$ or even less, is placed in the internal part of the membrane.

The quantity of liquid which is filtered by means of this kind of modules essentially depends on the filtering surface; however, since the several filtration cartridges are not always perfectly placed inside of the container, it occurs that, in order to obtain given quantities of filtered product, the length of the modules attains very high values, even of several metres, thereby causing bulk problems to the whole ultrafiltration plant.

Furthermore, the use of polysulfonate membranes involves a series of drawbacks which limit their practical application.

A first disadvantage is constituted by the maximum allowable working temperature of polysulfonate, i.e. 60° to 70°C.

While this temperature level is never reached, for instance, during a wine filtration process, on the other hand the sterilization of the filtering plant takes place by feeding into the pipelines steam at a temperature of 121°C, and this would damage the filtration cartridges in a permanent way.

A second drawback which may be remarked in working with filtration modules based on the use of polysulfonate membranes, is constituted by the operating pressure which is required by the filtration process, i.e. about 6 bar; this involves relatively high energetic costs for managing the plant.

A third disadvantage, which typical of tubular filtration cartridges based on the us of polysulfonate membranes, is constituted by the fact that they necessarily must work at positive pressures; in fact, applying a counterpressure leads the membrane to an immediate collapse and to the consequent damage of the cartridge.

Another type of filtration module which is used in ultrafiltration plants is constituted by a tubular cartridge formed by a polytetrafluorethylene (PTFE) membrane which is helically wound and cooperates with a polypropylene spacing mesh having a thickness comprised between 0,5 and 0,7 mm, interposed between the different membrane windings forming the cartridge.

This kind of filtration modules is exclusively used for extreme ultrafiltration processes, in which the discriminating layer is remarkably smaller than 0,1 $\mu$.

These modules are typically employed for water/oil separation, recovering of latex, alkaline degreasing baths, Diesel oil/water separation, filtering of drinkable water; furthermore, they are also used for specialized pharmaceutical applications.

Documents EP-A-0.347.174, US-A-4.301.013, US-A-4.802.982 and EP-A-0.382.488 all disclose ultrafiltration or reverse osmosis membranes of the type which has just been described.

None of these documents discloses the application of this kind of membrane to filtration plants of wine or fruit juices, in spite of the several attempts which have been carried out in order to apply this kind of membranes to wine filtering plants.

These attempts actually showed that these membranes are not practically usable for filtering wines or fruit juices, since they are very quickly clogged by the products which are present, for instance, in the raw wine, and their use is solely conceivable when the plant is provided with a pre-filtration section, which remarkably raises the cost of the plant itself.

Finally, it may be noted that, in the field of wine filtration, it is generally unadvisable to carry out an ultrafiltration process, i.e. a process suitable for separating particles having a diameter smaller than 0,1 $\mu$ since, in this case, a strong retention of total polyphenolic colloids occurs, and this involves a substantial change of the organoleptical properties of the filtered wine, relative to the original product.

DESCRIPTION OF THE INVENTION

The present invention aims to obviate to the disadvantages and drawbacks mentioned above, and to provide, thus, for a filtration module for filtering wines or fruit juices, which would allow to reduce in a substantial way the operating costs of the filtering plant to which said module is connected, as well as to improve the technical characteristics of filtration plants, in particular of wine filtering plants, by allowing the module to stand the high sterilization temperatures and to work under counterpressure conditions.

This is achieved by means of a filtration module having the features disclosed in the main claim.

The dependent claims describe advantageous forms of embodiment of the invention.

The filtration module according to the invention comprises a cartridge constituted by a helically wound polytetrafluorethylene membrane, of the type which is generally used for carrying out microfiltration processes.

Surprisingly, it has been remarked that such membrane, which may normally not be used for carrying out filtration processes of foodstuffs, and particularly of wine, may yet find an application in these processes by means of a simple constructive step consisting in:

- the membrane having a rated void fraction (discriminating layer) of at least 0,1 $\mu$ and, advantageously, of 0,2 $\mu$, and
- the spacing mesh disposed between the various windings having a thickness of at least 1 mm.

In this context, it should be noted that PTFE membranes usually have discriminating layers $\leq$ 0,1 $\mu$ and that the spacing meshes which are normally used for these kinds of membrane have thicknesses comprised between 0,5 and 0,7 mm.

Relative to filtering of wine, the best results are achievable with a mesh thickness of comprised between 1,25 mm and 2,54 mm, advantageously a thickness of 2,30 mm, which allows the membrane to be very long lasting and to never become clogged.

The cartridge according to the invention allows a series of important advantages to be be achieved, in respect of a known polysulfonate membrane which is normally used in wine filtering plants.

By equal cartridge volumes, the filtration surface of a helically wound membrane is much larger; it has been calculated that the costs for operating a plant provided with helically wound PTFE membranes may be set to about 1/10 relative to the typical costs for operating a plant provided with capillary polysulfonate membranes.

Still, PTFE membranes require lower operating pressures (1 to 1,5 bar) than polysulfonate membranes (about 6 bar), this fact implying a remarkable reduction of energetic costs.

Furthermore, helically wound PTFE membranes stand a counterpressure working condition equal to the outlet pressure of the concentrated product; this operating way leads tubular polysulfonate membranes to collapse.

Finally, helically wound PTFE membranes stand without problems a temperature of about 120 °C, which is required for the plant sterilization operations.

ILLUSTRATION OF THE DRAWINGS

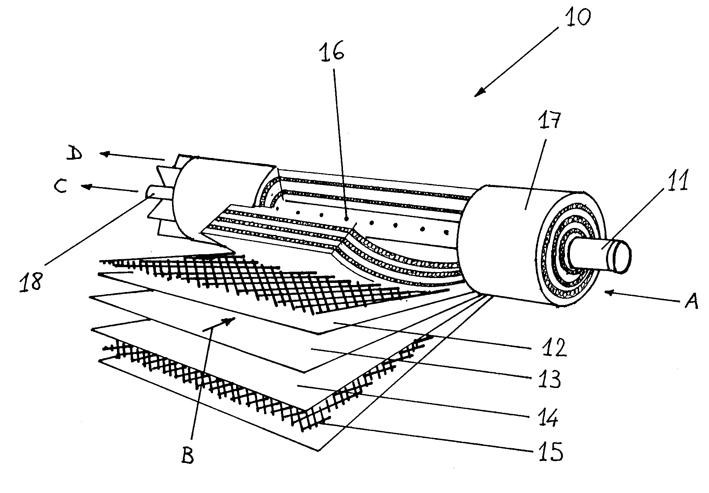

Other features and advantages of the invention will become apparent by reading the following description, of a form of embodiment of the invention, given as a non-limiting example, with the help of the figure illustrated in the attached sheet, which shows a perspective view of a filtration module according to the invention.

DESCRIPTION OF A PREFERRED FORM OF EMBODIMENT

In the figure, reference sign 10 generally indicates a filtration module for a filtration plant of wine or fruit juicesaccording to the present invention.

Module 10 comprises a pipe 11, generally made of a plastic material, about of which is wound a composite sheet formed, respectively, by a first PTFE membrane 12, by a substantially spongy material 13 for collecting the permeate, by a second PTFE membrane 14 and by a polypropylene spacing mesh 15.

According to the invention, the rated void fraction or discriminating layer of membranes 12 and 14 has a value comprised between 0,1 $\mu$ and 1 $\mu$, and is preferably set to 0,2 $\mu$.

The composite sheet is wound about the pipe 11, which is provided with a plurality of apertures 16 for collecting he permeate, in order to form a substantially cylindrical filtration cartridge, whose external surface 17 cooperates with a second, containment, polypropylene mesh (not represented in the figure).

In operation, the foodstuff to be filtered is inserted into the module 10 along the longitudinal axis of the module itself and gets into the cartridge through the first spacing mesh 15, according to the direction which is indicated by arrow A.

During the filtration process, the product which is permeated through the membranes 12, 14 is deposited on the collecting material 13 and flows towards the apertures 16 according to a direction which is indicated by arrow B.

When coming out from module 10, the permeated product is fed into outlet pipe 18 (see arrow C), while the concentrated product flows according to the direction indicated by arrow D and is thereafter suitably canalized.

According to an essential feature of the invention, the spacing mesh 15 has a thickness of at least 1 mm and, advantageously, it has a thickness comprised between 1,25 mm and 2,54 mm, contrary to the mesh thicknesses (~ 0,6 mm) which are normally used for ultrafiltration cartridges.

Relative to wine filtration, the best results are achievable by using meshes having a thickness of about 2,30 mm.

This feature allows a such filtration module to be employed, with best results, in microfiltration processes, which are characterised by discriminating layers having a thickness larger than $0,1 \mu$.

In this way PTFE membranes, which are typically used only in ultrafiltration processes, may also be used for microfiltration processes as those which are carried out with foodstuffs as wine or fruit juices, thereby not causing a retention of colloids, nor compromising the organoleptical properties of the product.

By way of example, a filtration module according to the invention may be applied to plants of the kind which is described in italian patent application n. 84966/90.

## Claims

1. Filtration module (10) for filtration plants of wine or fruit juices, comprising a substantially cylindrical cartridge including a pipe (11) for collecting a permeated product, and a composite sheet which is helically wound about said pipe (11), said composite sheet comprising a first polytetrafluorethylene membrane (12), a second polytetrafluorethylene membrane (14) and a material (13) for collecting a permeated product disposed between said first (12) and second (14) membranes, and a spacing mesh (13) disposed on said composite sheet, characterised in that said spacing mesh has a thickness of at least 1 mm.

2. Filtration module (10) according to claim 1, characterised in that said spacing mesh has a thickness comprised between 1,25 mm and 2,54 mm and, preferably, of about 2,30 mm.

3. Filtration module according to anyone of the preceding claims, characterised in that said membranes (12, 14) have a rated void fraction comprised between $0,1 \mu$ and $1 \mu$ and, preferably, of $0,2 \mu$.

4. Filtration module (10) according to anyone of the preceding claims, characterised in that it further comprises a second mesh placed around said cartridge.

5. Filtration module (10) according to claim 4, characterised in that said first (15) and/or said second meshes are realised in a syntetic material.

6. Filtration plant of wine or fruit juices, in which a product is frontally fed into a filtering section provided with at least one membrane filtration module and here separated into a permeated product and a concentrated product, characterised in that said filtration module (10) is made according to anyone of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | EP-A-0 347 174 (DESALINATION SYSTEMS INC)<br>* abstract; claims; figures 1-7 *<br>* column 1, line 1 - column 4, line 56 *<br>* column 6, line 57 - column 7, line 28 *<br>* column 8, line 9 - column 9, line 28 *<br>* column 10, line 49 - column 11, line 7 *<br>--- | 1-3,5,6 | B01D63/10<br>C12G1/00<br>A23L2/30 |
| Y | DE-A-3 813 924 (MYLIUS)<br>* the whole document *<br>--- | 1-3,5,6 | |
| D,A | US-A-4 301 013 (ABCOR INC)<br>* the whole document *<br>--- | 4 | |
| D,Y | US-A-4 802 982 (DESALINATION SYSTEMS INC)<br>* abstract; claims 1,5,7-9; figures 1-5 *<br>* column 2, line 41 - line 49 *<br>* column 4, line 11 - line 52 *<br>* column 7, line 7 - line 14 *<br>* column 10, line 54 - line 59 *<br>--- | 1-3,5,6 | |
| D,Y | EP-A-0 382 488 (KOCH MEMBRANE SYSTEMS INC)<br>* abstract; claims 1,5,8; figures 1-3 *<br>* column 1, line 5 - line 30 *<br>* column 4, line 6 - line 25 *<br>--- | 1-3,5,6 | TECHNICAL FIELDS SEARCHED (Int. Cl.5 ) |
| P,X | EP-A-0 448 973 (TORAY IND INC) 2 October 1991<br>* abstract; claims 1,5; figures 1,2 *<br>* column 7, line 16 - column 8, line 35 *<br>----- | 1,2,5,6 | B01D<br>C12G<br>C12M |

The present search report has been drawn up for all claims

| Place of search | Date of completion of the search | Examiner |
|---|---|---|
| THE HAGUE | 18 JUNE 1992 | HOORNAERT P.G.R. |